# EUROPÄISCHE PATENTSCHRIFT

(11) **EP 2 209 553 B1**
(45) Veröffentlichungstag und Bekanntmachung des Hinweises auf die Patenterteilung: **07.08.2013**
(21) Anmeldenummer: 08840505.5
(22) Anmeldetag: 15.10.2008
(51) Int. Cl.: B01J 20/32, C08G 77/04, C08G 77/18, C08G 77/46, C08J 9/42, B01F 17/00

(54) **WASSERSPEICHER**
WATER STORAGE TANK
ACCUMULATEUR D'EAU

(30) Priorität: 17.10.2007 DE 102007050046
(43) Veröffentlichungstag der Anmeldung: 28.07.2010
(73) Patentinhaber: BYK-Chemie GmbH, 46483 Wesel (DE)
(72) Erfinder: BUBAT, Alfred, 46487 Wesel (DE); ALBERT, Frank, 46509 Xanten (DE); HARTMANN, Jürgen, 46147 Oberhausen (DE); GARLINSKY, Jörg, 46485 Wesel (DE)
(74) Vertreter: Kutzenberger, Helga
(86) Internationale Anmeldenummer: PCT/EP2008/008713
(87) Internationale Veröffentlichungsnummer: WO 2009/049867

(56) Entgegenhaltungen:
- EP-A- 1 258 290
- WO-A-2004/074379
- WO-A-2005/003215
- DE-A1- 19 604 601
- "Water absorbing resin particles - treated with silicon surfactant for modification, modified with polyethylene oxide" DERWENT,, 1. Januar 1900 (1900-01-01), XP002224877

## Beschreibung

Die vorliegende Erfindung betrifft einen mit einem wässrigen Medium beladenen, aus porösen, frei fließenden hydrophoben Partikeln bestehenden Speicher, wobei die Partikel aus einem hydrophoben Polymeren gebildet sind und die Beladung wenigstens ein Vermittleradditiv der nachstehenden allgemeinen Formel (I) enthält, und die Verwendung des beladenen Speichers als Schleppmittellieferant zur Entfernung von leichtflüchtigen Bestandteilen aus Kunststoffen, insbesondere geruchsbildende Hilfsstoffe, zur gleichmäßigen Dosierung von Kunststoffhilfsstoffen, als Wasserspeicher oder als Bodenverbesserungsmittel.

Es ist allgemein bekannt, dass wässrige Medien, insbesondere Wasser, als Schleppmittel eingesetzt werden können, um u.a. eine Verringerung von Restmonomerengehalten bei der Verarbeitung von Polymeren zu erzielen. Damit kann auch eine Reduktion der Emission von flüchtigen, organischen, ggf. geruchsemittierenden Substanzen erreicht werden, wie dies bei der Verarbeitung von rezyklierten Polymeren notwendig ist.

Um Wasser in ein zu behandelndes Polymeres möglichst effizient einzutragen, können mit Wasser beladene, poröse Partikel während der thermoplastischen Verarbeitung des Polymeres in die Polymerschmelze eingearbeitet werden. Während der Extrusion wird das Wasser ausgetrieben und wirkt als Schleppmittel für flüchtige Substanzen, die mit dem Wasserdampf entfernt werden.

Die dabei zum Einsatz kommenden porösen Partikel sind vorzugsweise aus hydrophoben Polymeren wie beispielsweise Polyethylenen oder Polypropylenen. Diese zeichnen sich u.a. durch eine hohe chemische Beständigkeit und durch eine hohe mechanische und thermische Stabilität aus. Deshalb eignen sich diese Polymere auch zur Herstellung poröser Partikel, die mit wässrigen Medien beladen und weiter verwendet werden können.

Aus WO 2005/003215 sind solche mit wässrigen Medien beladende, porösen, zumindest teilweise offenporige Partikel bzw. entsprechende Speicher bekannt. Derartige Partikel bzw. Speicher haben jedoch den Nachteil, dass die Partikel mit einer verhältnismäßig großen Tensidmenge vor ihrer Beladung mit Wasser ausgerüstet werden müssen. Nur so wird eine Beladung von größer als 50% mit einem wässrigen Medium erreicht. Die Beladung von Partikeln mit verhältnismäßig großen Mengen an Tensiden stellt aber ein Problem dar, weil diese Tenside einen nicht unbeträchtlichen Einfluss auf den gewünschten Verwendungszweck der Beladung haben können. So können u.a. beim Einsatz der beladenen Speicher als Schleppmittellieferant aus den Tensiden Abbauprodukte gebildet werden, die nicht nur Schleppmittel, d.h. Wasser verbrauchen, sondern auch selbst geruchsbildende Substanzen sein können.

Eine Aufgabe der vorliegenden Erfindung war es daher, einen Speicher mit einer hohen Beladung mit wässrigen Medien bereitzustellen, dessen gesamte Beladung unbeeinflusst, d.h. im wesentlichen insgesamt für den gewünschten Verwendungszweck zur Verfügung steht.

Diese Aufgabe wird durch den erfindungsgemäßen, mit einem wässrigen Medium beladenen, aus porösen, frei fließenden hydrophoben Partikeln bestehenden Speicher gelöst, dessen Partikel aus einem hydrophoben Polymeren gebildet sind, vorzugsweise eine mittlere Partikelgröße zwischen 50 und 5000 µm, eine vorzugsweise zumindest teilweise offenporige Struktur und vorzugsweise einen mittleren Porendurchmesser zwischen 1 µm und 200 µm aufweisen und dessen wässrige Beladung wenigstens ein Vermittleradditiv der allgemeinen Formel (I) 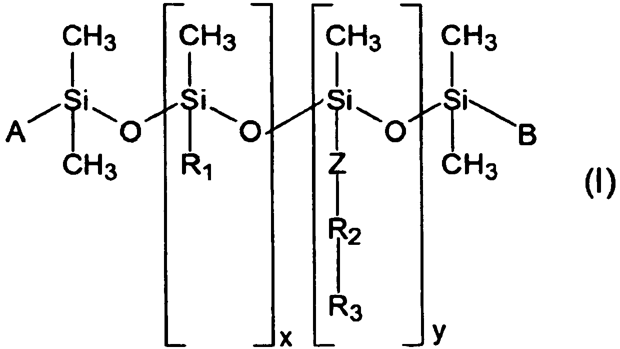 aufweist, in der
- R₁: für einen Alkylrest mit 1 bis 6 C-Atomen steht,
- A und B,: gleich oder verschieden, für einen Alkyrest mit 1 bis 6 C-Atomen oder eine Gruppe der Formel -Z-R₂-R₃ stehen, in der
- Z: für einen Rest der Formel -CᵣH₂ᵣO- steht, in der
- r: eine ganze Zahl von 1 bis 10, vorzugsweise 1 bis 4, besonders bevorzugt 3 bedeutet,
- R₂: für einen Rest der Formel 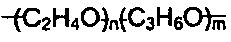 steht, in der
- m: 0 oder eine ganze Zahl von 1 bis 4,
- n: eine ganze Zahl von 1 -12 bedeutet und die n-fach bzw. m-fach wiederkehrenden Einheiten blockartig oder statistisch angeordnet sein können,
- R₃: für eine OH-Gruppe oder einen Alkylrest mit 1 bis 6 C-Atomen, vorzugsweise einen Methylrest steht,
- x: 0 oder eine ganze Zahl von 1 - 3 bedeutet und
- y: 0 oder eine ganze Zahl von 1 - 3 bedeutet,
wobei das Vermittleradditiv immer mindestens eine Gruppe der Formel -Z-R₂-R₃ aufweisen muss.

Vorzugsweise werden als Vermittleradditive solche Verbindungen der allgemeinen Formel (I) eingesetzt, bei denen der Rest der Formel -(C₂H₄O)ₙ(C₃H₆O)-ₘ ein mittleres Molekulargewicht von 100 bis 5000, vorzugsweise 150 bis 1000 und besonders bevorzugt von 200 bis 600 aufweist.

Ebenso bevorzugt werden als Vermittleradditive Verbindungen der Formel **I** eingesetzt, in der
- R₁: für einen Rest ausgewählt aus der Gruppe bestehend aus Methyl, Ethyl, Propyl, iso-Propyl und n-Propyl steht und
n, m, x, y, r, A, B, Z, R₂ und R₃ die vorstehend genannte Bedeutung haben.

Bevorzugte Vermittleradditive sind auch solche, bei denen
- A: für einen Methyl-Rest oder eine Gruppe der Formel -Z-R₂-R₃,
- B: für einen Methyl-Rest,
- R₂: für einen Rest der Formel -(C₂H₄O)ₙ oder 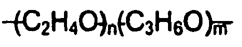 mit
- m: für 1 oder 2 und
- n: für 5, 6, 7, 8 oder 9 stehen
und x, y, r, Z und R₃ die vorstehend genannte Bedeutung haben.

Sämtliche aufgeführten bevorzugt zum Einsatz kommende Vermittleradditive müssen jeweils mindestens eine Gruppe der Formel -Z-R₂-R₃ aufweisen.

Die Herstellung der vorstehend aufgeführten Vermittleradditive ist dem Fachmann bekannt. Als entsprechenden Offenbarung wird auf die US-A-3,299,112 bzw. US-A-4,933,002 verwiesen.

Die erfindungsgemäß zur Herstellung des beladenen Speichers zum Einsatz kommenden porösen, partikelförmigen, hydrophoben Partikel mit einer zumindest teilweise offenporiger Struktur haben eine schwammartige, zellförmige oder auch eine netzwerkartige Mikrostruktur. Die Poren sind zumindest teilweise offenporig und die im Partikel vorhandenen Poren und Kanäle stehen zumindest in Teilbereichen der Partikelstruktur miteinander in Verbindung.

Die erfindungsgemäß zum Einsatz kommenden Partikel bestehen vorzugsweise aus hydrophoben Polymeren wie Thermoplasten und/oder Elastomeren. Besonders bevorzugt bestehen die erfindungsgemäß zum Einsatz kommenden Partikel aus Polymeren oder Mischungen von Polymeren ausgewählt aus der Gruppe umfassend Polyolefine, insbesondere Polyethylene oder Polypropylene, Fluorpolymere, Polycarbonate, Polystyrole, Polyester, Polyvinylchloride, Polyurthane, Polymethacrylate oder Polyamide.

Besonders bevorzugt bestehen die erfindungsgemäß zum Einsatz kommenden Partikel aus wenigstens einem Polymeren oder Copolymeren, das ausgewählt ist aus der Gruppe umfassend HDPE (high density polyethylene), LDPE (low density polyethylene), LLDPE (linear low density polyethylene), UHMW-PE (ultra high molecular weight polyethylene), mPE (metallocen-PE), Polypropylen, Ethylen-Propylen-Copolymer, Polyisobuten, PB (Polybutylen), PMP (Polymethylpenten), PTFE (Polytetrafluoroethylen), FEP (Perfluor-Ethylen-Propylen-Copolymer), CTFE (Polychlortrifluorethylen), ECTFE (Ethylen-Chlortrifluorethylen-Copolymer), ETFE (Ethylen-Tetrafluorethylen- Copolymer), Tetrafluorethylen-Propylen-Copolymer, Polyvinylidenfluorid, Polyvinychlorid, Copolymer aus Tetrafluorethylen- und Hexafluorpropylen, Copolymer aus Tetrafluorethylen- und Perfluoralkylvinylether, Copolymer aus Ethylen-Tetrafluorethylen, PC (Polycarbonat), Polystyrol, Styrol-Acrylnitril-Copolymer, Styrol-Butadien-Copolymer, Acrylnitril-Butadien-StyrolCopolymere, PBT (Polybutylenterephthalat), PET (Polyethylenterephthalat) und PA (Polyamiden) wie PA6.

Die erfindungsgemäß zum Einsatz kommenden Partikel weisen vorzugsweise eine Porosität von wenigstens 30 Vol.-%, bevorzugter von wenigstens 50 Vol.-%, besonders bevorzugt von wenigstens 60 Vol.-% auf. Besonders bevorzugt weisen die erfindungsgemäß zum Einsatz kommenden Partikel eine Porosität von 50 bis 80 Vol.-% auf. Die Vermessung der (Volumen-)Porosität erfolgt nach Methoden, die dem Fachmann allgemein bekannt sind. Beispielsweise kann die Porosität der erfindungsgemäß zum Einsatz kommenden Partikel über eine pyknometrische Messmethode unter Verwendung von Wasser als nicht-benetzende Flüssigkeit, oder mittels geeigneter Intrusionsmethoden, wie z.B. über Quecksilberintrusion bestimmt werden.

Vorzugsweise weisen die erfindungsgemäß zum Einsatz kommenden Partikel eine mittlere Partikelgröße von 10 bis 10000 µm, bevorzugter von 200 bis 7000 µm, noch bevorzugter von 500 bis 5000 µm, am bevorzugtesten von 1000 bis 4000 µm und insbesondere von 1500 bis 3000 µm auf. Die Bestimmung der mittleren Partikelgröße erfolgt vorzugsweise mikroskopisch anhand einer repräsentativen Probemenge mittels eines Messokulars oder vorzugsweise mittels eines geeigneten Bildauswerteverfahrens. Derartige Messmethoden sind dem Fachmann bekannt.

In einer bevorzugten Ausführungsform der Erfindung weisen die erfindungsgemäß zum Einsatz kommenden Partikel einen mittleren Porendurchmesser von vorzugsweise 0,5 bis 500 µm, bevorzugter 1 bis 400 µm, noch bevorzugter 1 bis 300 µm, am bevorzugtesten 1 bis 200 µm und insbesondere 1 bis 100 µm auf, wobei der mittlere Porendurchmesser nach allgemein bekannten Messmethoden bestimmt werden kann. So wird die mittlere Porengröße gemäß von digitalisierter REM-Aufnahmen von Bruchbildem der Proben bestimmt, die mit Hilfe einer geeigneten Bildanalyse-Software ausgewertet werden. Dabei wird aus einer REM-Aufnahme der Porendurchmesser von ca. 50 bis 100 Poren in µm gemessen. Aus den Einzelwerten wird über Mittelwertbildung der zugehörige mittlere Porendurchmesser berechnet.

Die vorstehend aufgeführten, erfindungsgemäß zum Einsatz kommenden Partikel sind kommerziell erhältlich.

Es wurde überraschend gefunden, dass das wässrige Medium, insbesondere Wasser, nur eine geringe Mengen eines Vermittleradditivs der allgemeinen Formel I aufweisen muss, um eine Beladung des Speichers mit wässrigen Medien bis wenigstens 30 Gew.-%, bezogen auf das Gesamtgewicht des beladenen Speichers, zu gewährleisten.

So reicht es aus, um eine Wasserbeladung von vorzugsweise ≥ 30 Gew.-%, bezogen auf das Gesamtgewicht des beladenen Speichers, mit einem wässrigen Medium zu erzielen, dass wenigstens ein Vermittleradditiv der Formel I in einer Menge von vorzugsweise höchstens 4 Gew.-%, bevorzugter von höchstens 3 Gew.-%, noch bevorzugter von höchstens 1 Gew.-%, am bevorzugtesten von höchstens 0,5 Gew.-% und insbesondere von höchstens 0,1 Gew.-%, jeweils bezogen auf das Gesamtgewicht des wässrigen Mediums, in dem zur Beladung vorgesehenen wässrigen Medium gelöst oder suspendiert vorliegt.

Damit ist eine Beladung der erfindungsgemäß zum Einsatz kommenden Partikel mit wässrigen Medien, insbesondere mit Wasser, bis vorzugsweise wenigstens 30 Gew.-%, bevorzugter bis wenigstens 50 Gew.-% und besonders bevorzugt bis wenigstens 60 Gew.-%, jeweils bezogen jeweils auf das Gesamtgewicht des beladenen Speichers, erzielbar.

Für eine solche Beladung ist es besonders vorteilhaft, wenn wenigstens ein Vermittleradditiv der Fomel I in einer Menge von 0,01 bis 5 Gew.-%, bevorzugter 0,03 bis 3 Gew.-%, noch bevorzugter 0,05 bis 2 Gew.-%, am bevorzugtesten 0,05 bis 1 Gew.-%, jeweils bezogen auf das Gesamtgewicht des beladenen Speichers, in der Beladung des Speichers vorliegt.

Die Beladung der erfindungsgemäß zum Einsatz kommenden Partikel mit dem wässrigen Medium erfolgt erfindungsgemäß durch das Zusammenbringen der Partikel mit einem Vermittleradditiv der Formel I, ggf. unter Schütteln und/oder Rühren, für eine Dauer von vorzugsweise mindestens 10 min, bevorzugter mindestens 30 min, noch bevorzugter mindestens 60 min, am bevorzugtesten mindestens 70 min und insbesondere mindestens 90 min.

Zur Beschleunigung des Benetzungsvorgangs kann auch Ultraschall eingesetzt und/oder ein Vakuum angelegt werden. Besonders bevorzugt werden die erfindungsgemäß zum Einsatz kommenden Partikel mit dem wässrigen Medium zusammengebracht, welches das Vermittleradditiv der Formel I bereits enthält. Dabei liegt das Vermittleradditiv in dem wässrigen Medium verteilt, vorzugsweise gelöst oder suspendiert, vor.

Besonders bevorzugt erfolgt die Benetzung und Beladung der erfindungsgemäß zum Einsatz kommenden Partikel in einem Schritt, vorzugsweise unter Vakuum. Dadurch können aufwändige Benetzungsvorgänge verkürzt und somit Zeit und Kosten gespart werden.

Vorzugsweise ist das zur Beladung eingesetzte wässrige Medium Wasser.

Ein weiterer Gegenstand der vorliegenden Erfindung betrifft auch die Verwendung eines vorstehend beschriebenen, beladenen Speichers als Wasserspeicher.

Ein weiterer Gegenstand der vorliegenden Erfindung betrifft auch die Verwendung eines vorstehend beschriebenen, beladenen Speichers als Schleppmittellieferant zur Entfernung von leichtflüchtigen Bestandteilen wie flüchtigen, organischen Verbindungen und/oder geruchsemittierenden Substanzen aus Kunststoffen, insbesondere als Schleppmittellieferant zur Entfernung von unerwünschten, flüchtigen und ggf. geruchsbildenden Verbindungen aus Kunststoffen, wie Recyklaten und damit zur Emissionsreduktion dieser Nebenprodukte aus den Recyklaten hergestellten Kunststoffartikeln, zur gleichmäßigen Dotierung von Kunststoffzwischenprodukten und/oder Kunststoffartikeln mit Hilfsstoffen.

Für diese Dosierung von Hilfsstoffen in Kunststoffen kann das geladene, wässrige Medium neben dem erfindungsgemäß zum Einsatz kommende Vermittleradditiv, Hilfsstoffe ausgewählt aus der Gruppe umfassend Antifogmittel, Antioxidationsmittel, Flammschutzmittel, Schmiermittel, Gleitmittel, Stabilisatoren, UV-Filter, Lichtstabilisatoren, Formtrennmittel, Antistatika, Verschäumungsmittel, Schlagzähigkeitsverbesserer, Farbstoffe, Füllstoffe, Hitzestabilisatoren, optische Aufheller und rheologische Zusätze aufweisen.

Ein weiterer Gegenstand der Erfindung betrifft auch die Verwendung eines mit wässrigem Medium beladenen Speichers, dessen Beladung entsprechend der Verwendung ein Düngemittel, ein Pflanzenschutzmittel, ein Insektizid und/oder Wachstumsförderungsmittel enthält, zur Bodenverbesserung, zur Bewässerung, zur Düngung und/oder zum Pflanzenschutz.

Ein weiterer Gegenstand der Erfindung betrifft auch die Verwendung eines erfindungsgemäßen vorzugsweise mit Wasser beladenen Speichers zur Luftbefeuchtung und/oder Luftklimatisierung.

Für alle Einsatzzwecke des efindungsgemäßen mit wässrigem Medium, vorzugsweise Wasser, beladenen Speicher ist es vorteilhaft, wenn die Beladung ein Biocid gegen Verkeimung bei der Lagerung des beladenen Speichers enthält.

Ein weiterer Gegenstand der Erfindung betrifft ein Verfahren zur Behandlung von recykliertem Kunststoff mit einem erfindungsgemäßen, beladenen Speicher als

Schleppmittellieferant, um bei dessen Verarbeitung die Emission von flüchtigen, organischen Verbindungen und/oder geruchsemittierenden Substanzen aus den aus dem recycelten Kunststoff hergestellten Artikeln zu verhindern oder zu reduzieren.

Die folgenden Beispiele dienen zur näheren Erläuterung der Erfindung ohne diese einzuschränken.

### Beispiele

### Vermittleradditive

Als Vermittleradditive wurden die in der nachstehenden Tabelle 1 aufgeführten Verbindungen der allgemeinen Formel (I) eingesetzt.

**Tabelle 1**

| **Struktur-elemente** | **VA 1** | **VA 2** | **VA 3** | **VA 4** | **VA 5** |
|---|---|---|---|---|---|
| A | -CH₃ | -Z-R₂-R₃ | -CH₃ | -CH₃ | -CH₃ |
| B | -CH₃ | -CH₃ | -CH₃ | -CH₃ | -CH₃ |
| R₁ | - | -CH₃ | -CH₃ | -CH₃ | -CH₃ |
| R₂ | 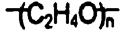 | 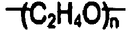 | 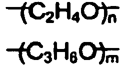 | 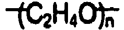 | 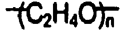 |
| R₃ | -OH | -CH₃ | -OH | -OH | -OH |
| x | 0 | 2 | 1 | 1 | 1 |
| y | 1 | 0 | 1 | 1 | 2 |
| n | 6 | 7 | 7 | 8 | 5 |
| m | 0 | 0 | 1 | 0 | 0 |
| z | -C₃H₆-O- | -C₃H₆-O- | -C₃H₆-O- | -C₃H₆-O- | -C₃H₆-O- |

### Beispiel 1

Es wurden 700g von porösen Polypropylen (PP)-Partikel mit einer mittleren Partikelgröße von 3mm x 3mm, mit einer Porosität von 70 Vol.-% und mit einer mittleren Porengröße von 20 - 80µm mit 1300g einer 0,08 Gew.-%igen, wässrigen Lösung des VA 1 (gemäß Tabelle 1) mittels eines Taumelmischers beladen (= 0,1 Gew.-% Vermittleradditiv, bezogen auf das Gesamtgewicht der unbeladenen Partikel; = 0,06 Gew.-% Vermittleradditiv, bezogen auf das Gesamtgewicht des beladenen Speichers). Die Beladungszeit betrug 90 Minuten und führte zu einer Wasseraufnahme von 65 Gew.-%, bezogen auf das Gesamtgewicht des beladenen Speichers.

### Beispiele 2-7

Analog Beispiel 1 (0,08 Gew.-%ige, wässrige Lösung) wurden weitere poröse Polymerpartikel, die in Tabelle 2 aufgeführt sind, beladen. Die Wasserbeladung (angegeben in Gew.-%) bezieht sich dabei jeweils auf das Gesamtgewicht des erfindungsgemäßen, beladenen Speichers.

**Tabelle 2**

| **Bsp.** | **Partikel** | **Porosität [Vol.-%]** | **Partikelgröße** | **Vermittler additiv** | **Wasserbeladung [Gew.-%]** |
|---|---|---|---|---|---|
| 2 | HDPE | 60 | 3mm x 3mm | VA 1 | 50 |
| 3 | PC | 70 | 1 mm x 1 mm | VA 2 | 60 |
| 4 | PA6 | 65 | 3mm x 3mm | VA 4 | 55 |
| 5 | PS | 60 | 4mm x 4mm | VA 2 | 50 |
| 6 | PET | 50 | 3mm x 3mm | VA 3 | 40 |
| 7 | PP | 70 | <1500µm | VA 5 | 65 |

| | | | | | |
|---|---|---|---|---|---|
| *HDPE: High-density-Polyethylen, PC: Polycarbonat, PA6: Polyamid 6, PS: Polystyrol, PET: Polyethylenterephthalat, PP: Polypropylen* * *bezogen auf das Gesamtgewicht des beladenen Speichers* | | | | | |

### Bestimmung der Beladung bzw. der Beladungszeit der porösen Partikel:

Die Bestimmung der Beladung sowie der charakteristischen Beladungszeit setzt voraus, dass die Volumenporosität des zu untersuchenden Materials bekannt ist. Von dem zu untersuchenden Material werden ca. 10 bis 30 g in einen 500 ml Glaskolben eingewogen. Die Menge des Wassers, die zu den Partikeln zuzugeben ist, d. h. das hinzuzufügende Volumen des Wassers, bestimmt sich nach der Porosität der Partikel bzw. nach dem Porenvolumen der eingewogenen Partikel. Dabei lässt sich das Porenvolumen der Partikel aus der Einwaage, der Polymerdichte p sowie der Porosität ε ermitteln. Im ersten Schritt wird soviel Wasser zudosiert, dass eine vollständige Aufnahme des Wassers durch die Partikel erwartet werden kann. Hierzu wird ein Wasservolumen zugegeben, das ca. 60 % des ermittelten Porenvolumens der Partikel entspricht.

Nach der Wasserzugabe wird der Glaskolben, in dem sich die Partikel befinden, mit einer geeigneten Mischeinrichtung wie z.B. einem Rotationsverdampfer mit einem auf 25°C temperierten Wasserbad verbunden. Im Anschluss daran wird solange gemischt, bis die Partikel außen trocken und gut rieselfähig sind. Die Beladungszeit vom Beginn des Mischens bis zur kompletten Aufnahme des Wassers wird mit einer Stoppuhr ermittelt.

Danach wird der Glaskolben von der Mischeinrichtung abgenommen, und es wird eine weitere Wassermenge zugegeben, die 5 % des Porenvolumens entspricht. Anschließend wird erneut gemischt und wiederum die Zeit gestoppt, bis auch diese Wassermenge vollständig von den Partikeln aufgenommen worden ist.

Dieser Vorgang wird so oft wiederholt, bis Sättigung der Partikel mit Wasser erreicht ist, wobei jeweils eine Wassermenge zudosiert wird, die 5 % des Porenvolumens entspricht. Als Sättigung wird dabei der Zustand definiert, bei dem auch nach einer Gesamtbeladungsdauer von 3 Std. gerade noch Wasser an der Wand des Glaskolbens und/oder ein Verkleben der Partikel beobachtet wird. Hierbei wird als charakteristische Beladungszeit die Summe der einzelnen mittels Stoppuhr ermittelten Beladungszeiten angesetzt, für die jeweils noch eine vollständige Aufnahme der Wassermenge von den Partikeln erfolgte. Die gesättigten Partikel werden danach zurückgewogen und aus der Differenz mit der Einwaage die Gesamtmenge des von den Partikeln aufgenommenen Wassers ermittelt. Die Beladung der Partikel ergibt sich aus dem Verhältnis der Gesamtmenge des von den Partikeln aufgenommenen Wassers und dem Gewicht der ungesättigten Partikel in (Gewichts-) Prozent.

### Beispiel 8 - Sensorische Prüfung von PP Recyklat

Ein Polypropylen-Recyklat wurde jeweils mit 0,5 Gew.-%, 1 Gew.-%, 1,5 Gew.-%, 2 Gew.-%, 2,5 Gew.-% oder 3 Gew.-%, bezogen auf das Gesamtgewicht, eines gemäß Beispiel 1 hergestellten , mit einer VA 1 als Vermittleradditiv enthaltenden wässrigen Beladung ausgerüsteten Speichers als Schleppmittellieferant im Extruder bei 200°C entgast und zu Granulat verarbeitet. Proben des jeweils entgasten Granulates wurden nach Lagerung gemäß VDA 270 "*Bestimmung des Geruchsverhaltens von Werkstoffen der Kraftfahrzeuginnenausstattung"* auf ihr Geruchsverhalten geprüft. Die Testmethode VDA 270 stellt eine etablierte Methode zur Bestimmung der Geruchsemissionen von Kunststoffen nach einer Lagerung bei bestimmten Klimabedingungen mittels Testriechem dar, wobei die Bewertungsskala von 1 bis 6 reicht.

Zur Messung wurden die Probe ohne Schleppmittelbehandlung 0 und die Proben 1-6 nach Schleppmittelbehandlung nach Variante 3 von VDA 270 aufbereitet und bei einer Lagertemperatur von 80 ± 2 °C für die Dauer von 2 Std.± 10 min in einem Glasbehälter als Prüfgefäß mit geruchsneutraler Dichtung und Deckel aufbewahrt. Um die Lagerdauer der VDA 270 Variante 3 einzuhalten, wurden die gefüllten Prüfgefäße zeitlich nacheinander in dem Wärmeschrank gelagert.

Zur Geruchsprüfung wurde jede Probe nach der Lagerung durch die 3 Prüfer überprüft. Die Prüfergebnisse sind nachstehend in Tabelle 3 angegeben:

**Tabelle 3**

| **Probe #** | **Schleppmittelbehandlung** | **Dosierung [Gew.-%]** | **Sensorische Beurteilung** |
|---|---|---|---|
| 0 | - | | 4-5 |
| 1 | + | 0,5 | 3-4 |
| 2 | + | 1,0 | 3 |
| 3 | + | 1,5 | 2-3 |
| 4 | + | 2,0 | 2-3 |
| 5 | + | 2,5 | 2-3 |
| 6 | + | 3,0 | 2-3 |

| | | | |
|---|---|---|---|
| * *Dosierung des beladenen Speichers hergestellt gemäß Beispiel 1 als Schleppmittellieferant* | | | |

## Patentansprüche

1. Mit einem wässrigen Medium beladener, aus porösen, frei fließenden hydrophoben Partikeln bestehender Speicher, wobei die Partikel aus einem hydrophoben Polymeren bestehen, **dadurch gekennzeichnet, dass** die wässrige Beladung wenigstens ein Vermittleradditiv der allgemeinen Formel (I) 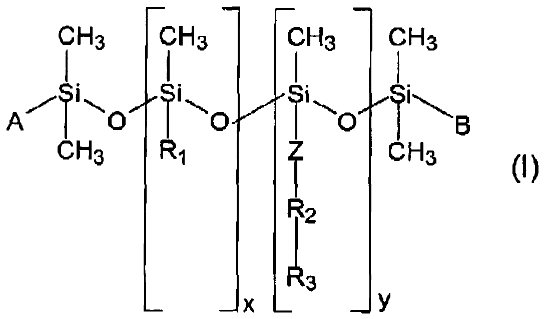 aufweist und die Beladung als Schleppmittel zur Entfernung von leicht flüchtigen Bestandteilen aus Kunststoffen, zur Dosierung von Hilfsstoffen in Kunststoffen oder, sofern die Beladung ein Düngemittel, ein Pflanzenschutzmittel, ein Insektizid und/oder Wachstumsförderungsmittel enthält, zur Bodenverbesserung, zur Bewässerung, zur Düngung und/oder zum Pflanzenschutz geeignet ist, wobei in der allgemeinen Formel (I)
R₁ für einen Alkylrest mit 1 bis 6 C-Atomen steht,
A und B, gleich oder verschieden, für einen Alkyrest mit 1 bis 6 C-Atomen oder eine Gruppe der Formel -Z-R₂-R₃ stehen, in der
Z für einen Rest der Formel -CᵣH₂ᵣ-O- steht, in der
r eine ganze Zahl von 1 bis 10, vorzugsweise 1 bis 4, besonders bevorzugt 3 bedeutet,
R₂ für einen Rest der Formel 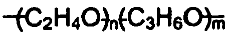 steht, in der
m 0 oder eine ganze Zahl von 1 bis 4 bedeutet,
n eine ganze Zahl von 1 -12
und die n-fach bzw. m-fach wiederkehrenden Einheiten blockartig oder statistisch angeordnet sein können,
R₃ für eine OH-Gruppe oder einen Alkylrest mit 1 bis 6 C-Atomen steht,
x 0 oder eine ganze Zahl von 1 - 3 bedeutet und
y 0 oder eine ganze Zahl von 1 - 3 bedeutet,
und wobei das Vermittleradditiv der allgemeinen Formel (I) immer mindestens eine Gruppe der Formel -Z-R₂-R₃ aufweist.

2. Beladener Speicher nach Anspruch 1, **dadurch gekennzeichnet, dass** in der allgemeinen Formel (I)
R₁ für einen Rest ausgewählt aus der Gruppe bestehend aus Methyl, Ethyl, Propyl, iso-Propyl und n-Propyl steht und
n, m, x, y, r, A, B, Z, R₂ und R₃ die Bedeutung gemäß Anspruch 1 haben.

3. Beladener Speicher nach Anspruch 1 oder 2, **dadurch gekennzeichnet, dass** in
der allgemeinen Formel (I)
A für einen Methyl-Rest oder eine Gruppe der Formel -Z-R₂-R₃ steht,
B für einen Methyl-Rest steht,
R₂ für einen Rest der Formel 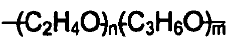 steht,
m für 1 oder 2 steht,
n für 5, 6, 7, 8 oder 9 steht,
und x, y, r, Z und R₃ die Bedeutung gemäß Anspruch 1 haben.

4. Beladener Speicher nach einem der Ansprüche 1 bis 3, **dadurch gekennzeichnet, dass** die Partikel aus Polyolefinen, vorzugsweise Polyethylenen oder Polypropylenen, Polycarbonaten, Fluorpolymeren, Polystyrolen, Polyestern oder Polyamiden bestehen.

5. Beladener Speicher nach einem der Ansprüche 1 bis 4, **dadurch gekennzeichnet, dass** die Partikel eine Porosität von wenigstens 30 Vol.-%, vorzugsweise 50 bis 80 Vol.-% aufweisen.

6. Beladener Speicher nach einem der Ansprüche 1 bis 5, **dadurch gekennzeichnet, dass** die Partikel eine mittlere Partikelgröße von 10 bis 10 000 µm und einen mittleren Porendurchmesser von 0,5 bis 500 µm aufweisen.

7. Beladener Speicher nach einem der Ansprüche 1 bis 6, **dadurch gekennzeichnet, dass** das Vermittleradditiv in einer Menge von 0,01 bis 5 Gew.-%, bezogen auf das Gesamtgewicht des beladenen Speichers, vorliegt.

8. Beladener Speicher nach einem der Ansprüche 1 bis 7, **dadurch gekennzeichnet, dass** die Beladung der Speicher mit dem wässrigen Medium, vorzugsweise Wasser, wenigstens 30 Gew.-%, bevorzugter wenigstens 50 Gew.-%, besonders bevorzugt wenigstens 60 Gew.-%,bezogen auf das Gesamtgewicht des beladenen Speichers, beträgt.

9. Beladener Speicher nach einem der Ansprüche 1 bis 8, **dadurch gekennzeichnet, dass** die wässrige Beladung höchstens 4 Gew.-% vorzugsweise höchstens 0,1 Gew-% jeweils, bezogen auf das Gesamtgewicht des wässrigen Medium, wenigstens eines Vermittleradditivs aufweist.

10. Beladener Speicher nach einem der Ansprüche 1 bis 9 **dadurch gekennzeichnet, dass** die wässrige Beladung neben wenigstens einem Vermittleradditiv wenigstens ein Pflanzenschutzmittel, Insektizid, Düngemittel und/oder ein anderes Wachstumsförderungsmittel enthält.

11. Beladener Speicher nach einem der Ansprüche 1 bis 10, **dadurch gekennzeichnet, dass** die wässrige Beladung neben dem Vermittleradditiv wenigstens einen Kunststoffhilfsstoff enthält.

12. Verwendung eines beladenen Speichers nach einem der Ansprüche 1 bis 9 als Wasserspeicher, vorzugsweise zur Luftbefeuchtung und/oder Luftklimatisierung.

13. Verwendung eines beladenen Speichers nach Anspruch 9 oder 11 als Schleppmittellieferant zur Entfernung von leichtflüchtigen Bestandteilen aus Kunststoffen; zur Entfernung von flüchtigen, organischen Verbindungen und/oder geruchsemittierenden Substanzen aus Kunststoffen, insbesondere aus Recyklaten; zur gleichmäßigen Dosierung von Kunststoffhilfsstoffen.

14. Verwendung eines beladenen Speichers nach Anspruch 9 oder 10 zur Bodenverbesserung, zur Bewässerung, zur Düngung und/oder zum Pflanzenschutz.

15. Ein Verfahren zur Reduzierung oder Verhinderung der Emission von flüchtigen, organischen Verbindungen und/oder geruchsemittierenden Substanzen aus Kunststoffartikeln, die aus Kunststoffrecyklaten hergestellt werden, indem bei der Herstellung ein beladener Speicher nach einem der Ansprüche 1 bis 9 zugegeben wird.

## Claims

1. Reservoir charged with an aqueous fluid and composed of porous, free-flowing hydrophobic particles, where the particles are composed of a hydrophobic polymer, **characterized in that** the aqueous charge comprises at least one compatibilizer additive of the general formula (I) 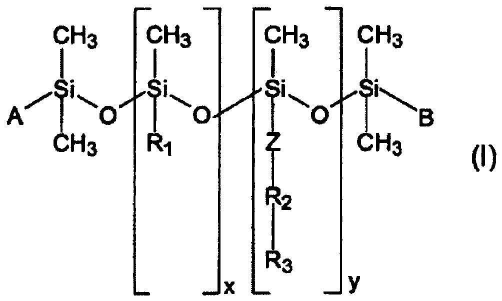 and the charge is suitable as entraining agent for removal of volatile constituents from plastics, or for addition of auxiliaries in plastics, or, to the extent that the charge comprises a fertilizer, a plant-protection agent, an insecticide and/or growth-promoting agent, is suitable for soil improvement, for irrigation, for fertilization and/or for plant protection, where in the general formula (I)
R₁ is an alkyl moiety having from 1 to 6 carbon atoms,
A and B, identical or different, are an alkyl moiety having from 1 to 6 carbon atoms or a group of the formula -Z-R₂-R₃, in which
Z is a moiety of the formula -C₁H₂ᵣ-O-, in which
r is a whole number from 1 to 10, preferably from 1 to 4, particularly preferably 3,
R₂ is a moiety of the formula 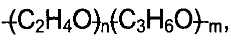 in which
m is 0 or a whole number from 1 to 4,
n is a whole number from 1 to 12,
and the arrangement of the units that are repeated n times and, respectively, m times can be of block type or random,
R₃ is an OH group or an alkyl moiety having from 1 to 6 carbon atoms,
x is 0 or a whole number from 1 to 3, and
y is 0 or a whole number from 1 to 3,
and where the compatibilizer additive of the general formula (I) always has at least one group of the formula -Z-R₂-R₃.

2. Charged reservoir according to Claim 1, **characterized in that** in the general formula (I)
R₁ is a moiety selected from the group consisting of methyl, ethyl, propyl, isopropyl, and n-propyl and
n, m, x, y, r, A, B, Z, R₂, and R₃ are defined according to Claim 1.

3. Charged reservoir according to Claim 1 or 2, **characterized in that** in the general formula (I)
A is a methyl moiety or a group of the formula -Z-R₂-R₃,
B is a methyl moiety,
R₂ is a moiety of the formula 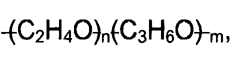
m is 1 or 2,
n is 5, 6, 7, 8, or 9,
and x, y, r, Z and R₃ are defined as in Claim 1.

4. Charged reservoir according to any of Claims 1 to 3, **characterized in that** the particles are composed of polyolefins, preferably of polyethylenes or of polypropylenes, of polycarbonates, of fluoropolymers, of polystyrenes, of polyesters, or of polyamides.

5. Charged reservoir according to any of Claims 1 to 4, **characterized in that** the porosity of the particles is at least 30% by volume, preferably from 50 to 80% by volume.

6. Charged reservoir according to any of Claims 1 to 5, **characterized in that** the average size of the particles is from 10 to 10 000 µm and the average pore diameter of the particles is from 0.5 to 500 µm.

7. Charged reservoir according to any of Claims 1 to 6, **characterized in that** the amount present of the compatibilizer additive is from 0.01 to 5% by weight, based on the total weight of the charged reservoir.

8. Charged reservoir according to any of Claims 1 to 7, **characterized in that** the amount of charge in the reservoirs with the aqueous fluid, preferably water, is at least 30% by weight, more preferably at least 50% by weight, particularly preferably at least 60% by weight, based on the total weight of the charged reservoir.

9. Charged reservoir according to any of Claims 1 to 8, **characterized in that** the aqueous charge comprises in each case, based on the total weight of the aqueous fluid, at most 4% by weight, preferably at most 0.1 % by weight, of at least one compatibilizer additive.

10. Charged reservoir according to any of Claims 1 to 9, **characterized in that** the aqueous charge comprises, alongside at least one compatibilizer additive, at least one plant-protection agent, insecticide, fertilizer and/or any other growth-promoting agent.

11. Charged reservoir according to any of Claims 1 to 10, **characterized in that** the aqueous charge comprises, alongside the compatibilizer additive, at least one plastics auxiliary.

12. Use of a charged reservoir according to any of Claims 1 to 9 as water reservoir, preferably for humidification and/or air-conditioning.

13. Use of a charged reservoir according to Claim 9 or 11 to deliver entraining agent for removal of volatile constituents from plastics; for removal of volatile organic compounds and/or of odor-emitting substances from plastics, in particular from recyclates; for the uniform addition of plastics auxiliaries.

14. Use of a charged reservoir according to Claim 9 or 10 for soil improvement, for irrigation, for fertilization, and/or for plant protection.

15. Method for reducing or inhibiting the emission of volatile organic compounds and/or of odor-emitting substances from plastics items which are produced from plastics recyclates, by adding a charged reservoir according to any of Claims 1 to 9 during the production process.

## Revendications

1. Accumulateur chargé d'un milieu aqueux, constitué de particules poreuses, hydrophobes, s'écoulant librement, les particules étant constituées par un polymère hydrophobe, **caractérisé en ce que** la charge aqueuse présente au moins un additif promoteur de formule générale (I) 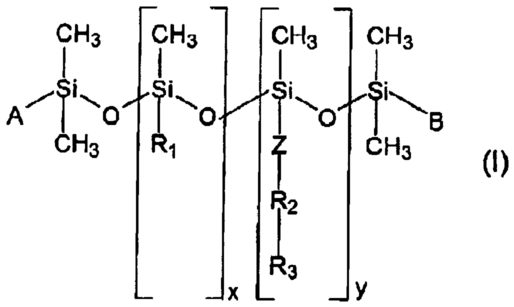 et la charge convient comme agent d'entraînement pour éliminer des constituants volatils de matériaux synthétiques, pour le dosage d'adjuvants dans des matériaux synthétiques ou, pour autant que la charge contienne un engrais, un agent de phytoprotection, un insecticide et/ou un agent favorisant la croissance, pour l'amélioration du sol, pour l'irrigation, pour la fertilisation et/ou pour la phytoprotection, où, dans la formule générale (I)
R₁ représente un radical alkyle comprenant 1 à 6 atomes de carbone,
A et B, identiques ou différents, représentent un radical alkyle comprenant 1 à 6 atomes de carbone ou un groupe de formule -Z-
R₂-R₃, dans laquelle
Z représente un radical de formule -CᵣH₂ᵣ-O-, dans laquelle
r signifie un nombre entier de 1 à 10, de préférence de 1 à 4, de manière particulièrement préférée 3,
R₂ représente un radical de formule 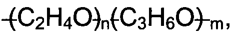 dans laquelle
m signifie 0 ou un nombre entier de 1 à 4,
n vaut un nombre entier de 1 à 12, et les unités qui se répètent n fois ou, selon le cas, m fois peuvent être disposées en blocs ou de manière statistique,
R₃ représente un groupe OH ou radical alkyle comprenant 1 à 6 atomes de carbone,
x signifie 0 ou un nombre entier de 1 à 3, et
y signifie 0 ou un nombre entier de 1 à 3,
et l'additif promoteur de formule générale (I) présentant toujours au moins un groupe de formule -Z-R₂-R₃.

2. Accumulateur chargé selon la revendication 1, **caractérisé en ce**
**que**, dans la formule générale (I)
R₁ représente un radical choisi dans le groupe constitué par méthyle, éthyle, propyle, isopropyle et n-propyle et
n, m, x, y, r, A, B, Z, R₂ et R₃ présentent la signification selon la revendication 1.

3. Accumulateur chargé selon la revendication 1 ou 2, **caractérisé en ce que**, dans la formule générale (I)
A représente un radical méthyle ou un groupe de formule -Z-R₂-R₃,
B représente un radical méthyle,
R₂ représente un radical de formule 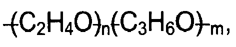
m représente 1 ou 2,
n représente 5, 6, 7, 8 ou 9, et
x, y, r, Z et R₃ présentent la signification selon la revendication 1.

4. Accumulateur chargé selon l'une quelconque des revendications 1 à 3, **caractérisé en ce que** les particules sont constituées de polyoléfines, de préférence de polyéthylènes ou de polypropylènes, de polycarbonates, de polymères fluorés, de polystyrènes, de polyesters ou de polyamides.

5. Accumulateur chargé selon l'une quelconque des revendications 1 à 4, **caractérisé en ce que** les particules présentent une porosité d'au moins 30% en volume, de préférence de 50 à 80% en volume.

6. Accumulateur chargé selon l'une quelconque des revendications 1 à 5, **caractérisé en ce que** les particules présentent une grosseur moyenne des particules de 10 à 10 000 µm et un diamètre moyen des pores de 0,5 à 500 µm.

7. Accumulateur chargé selon l'une quelconque des revendications 1 à 6, **caractérisé en ce que** l'additif promoteur se trouve en une quantité de 0,01 à 5% en poids, par rapport au poids total de l'accumulateur chargé.

8. Accumulateur chargé selon l'une quelconque des revendications 1 à 7, **caractérisé en ce que** la charge de l'accumulateur par le milieu aqueux, de préférence de l'eau, est d'au moins 30% en poids, de préférence d'au moins 50% en poids, de manière particulièrement préférée d'au moins 60% en poids, par rapport au poids total de l'accumulateur chargé.

9. Accumulateur chargé selon l'une quelconque des revendications 1 à 8, **caractérisé en ce que** la charge aqueuse présente au plus 4% en poids, de préférence au plus 0,1% en poids à chaque fois, par rapport au poids total du milieu aqueux, d'au moins un additif promoteur.

10. Accumulateur chargé selon l'une quelconque des revendications 1 à 9, **caractérisé en ce que** la charge aqueuse contient, outre au moins un additif promoteur, au moins un agent de phytoprotection, un insecticide, un engrais et/ou un autre agent favorisant la croissance.

11. Accumulateur chargé selon l'une quelconque des revendications 1 à 10, **caractérisé en ce que** la charge aqueuse contient, outre l'additif promoteur, au moins un adjuvant pour matériaux synthétiques.

12. Utilisation d'un accumulateur chargé selon l'une quelconque des revendications 1 à 9 comme accumulateur d'eau, de préférence pour l'humidification et/ou la climatisation de l'air.

13. Utilisation d'un accumulateur chargé selon la revendication 9 ou 11 comme fournisseur d'agent d'entraînement pour l'élimination de constituants volatils de matériaux synthétiques ; pour l'élimination de composés organiques volatils et/ou de substances émettant des odeurs de matériaux synthétiques, en particulier de produits recyclés ; pour le dosage régulier d'adjuvants pour matériaux synthétiques.

14. Utilisation d'un accumulateur chargé selon la revendication 9 ou 10 pour l'amélioration du sol, pour l'irrigation, pour la fertilisation et/ou pour la phytoprotection.

15. Procédé pour réduire ou empêcher l'émission de composés organiques volatils et/ou de substances émettant des odeurs d'articles en matériaux synthétiques, qui sont préparés à partir de matériaux synthétiques recyclés, en ce qu'on ajoute lors de la production un accumulateur chargé selon l'une quelconque des revendications 1 à 9.
